(19) Europäisches Patentamt

European Patent Office

Office européen des brevets

(11) **EP 1 662 730 A1**

(12) # EUROPEAN PATENT APPLICATION

(43) Date of publication:
**31.05.2006 Bulletin 2006/22**

(51) Int Cl.:
***H04L 12/56*** (2006.01)

(21) Application number: **05111329.8**

(22) Date of filing: **25.11.2005**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **26.11.2004 KR 2004098088**

(71) Applicant: **SAMSUNG ELECTRONICS CO., LTD.
Suwon-si,
Gyeonggi-do (KR)**

(72) Inventors:
 • **Kim, In-hwan**
  **Suwon-si (KR)**
 • **Bae, Dae-gyu**
  **Suwon-si (KR)**
 • **Sung, Hyun-ah**
  **Seoul (KR)**
 • **Hong, Jin-woo**
  **Suwon-si (KR)**

(74) Representative: **Waddington, Richard et al
15 Clare Road
Halifax,
West Yorkshire HX1 2HY (GB)**

(54) **Method and apparatus for sharing channel among coordinator-based wireless networks**

(57) A method and apparatus for sharing a channel among coordinator-based wireless networks are provided. The method includes a coordinator (230) of a first wireless network (110) selecting a channel through which data arc transmitted and received, selecting a period during which the channel is in a sleep period, setting the selected period as an active period of the first wireless network (110), and transmitting data containing information about the active period to the first wireless network (110).

**EP 1 662 730 A1**

**Description**

The present invention relates to a method and apparatus for sharing a channel among coordinator-based wireless networks.

Current concepts of networks include not only networks connecting personal computers, but also networks which connect all devices to other devices intending to exchange data. In the past, construction of wired networks was a major issue. Due to new wiring installation, and restricted mobility of the wired networks, however, there is a need for wireless communication technology. Wireless Local Area Network (WLAN) covering a range of 50 to 100 m and Wireless Personal Area Network (WPAN) as the short-range wireless network standard of less than 10 m are being currently standardized as wireless network technologies. In view of a housework area or mobility within home, the WPAN, enabling low power consumption and ad-hoc networking between devices, is more suitable for home appliances than the WLAN.

A coordinator-based wireless network refers to a network where a communication time and a contention mode of a wireless network are managed by a coordinator. The coordinator-based wireless network has multiple protocols defined by IEEE 802.15 Working Group.

The IEEE 802.15 Working Group developed the WPAN as the standard of a consisting of wireless network, and has four task groups (TGs) TG1 through TG4. TG1 establishes WPAN standards based on Bluetooth 1.x, and TG2 researches into coexistence of wireless networks. TG3 researches UltraWideband (UWB) offering low power consumption and high data rate (200 Mbps or greater), and TG4 investigates ZigBee suitable for a low data rate transmission of up to 250 Kbps with very low power consumption.

IEEE 802.15.4 performs standardization for Low Rate-WPAN (LR-WPAN) targeted at a simple, low cost wireless communication network in applications requiring low data rate. IEEE 802.15.4 standardization (ZigBee) group was formed in July 2000 to establish the standards for low data rate, low cost, low consumption power wireless transmission technology suitable for wireless integrated remote controllers, home appliance controllers, building control, remotely controlled toys, and the like. The ZigBee Working Group finalized a standard for Physical Layer (PHY) and Medium Access Control (MAC) Layer. The standard specifies operation in any of three bands. The 2.4 GHz Industrial, Scientific and Medical (ISM) band provides 16 channels and data rate of 250 Kbps, the 915 MHz band provides 10 channels and data rate of 40 Kbps and the 868 MHz band provides 1 channel and a data rate of 20 Kbps. A transmission range is 1 to 100 m.

Based on the result of standardization activities by the IEEE 802.15.4 Working Group, the ZigBee Association performs standardization activities for upper layers including a network layer. The ZigBee Association is an open-industry consortium, including Philips, Motorola, Honeywell, Mitsubishi, Invensys and Samsung as Promoters working together in order to supplement existing standard for network protocols among distributed devices and ad-hoc wireless networking, and about 50 member companies participating in drafting checklists and application definitions for testing interoperability. The IEEE 802.15.4 standards are targeting on 1) low power consumption, 2) low cost, and 3) reduced infrastructures to meet requirements to be interoperable with wireless sensors and controllers.

To meet low power and low cost requirements, a wireless network does not always need to be active. That is, a wireless network remains in an active mode to exchange necessary information only for a certain period of time while staying in a sleep mode for the rest of the time, thereby reducing power consumption. A technique that allows a wireless network to remain active for a limited time has been introduced to reduce power consumption.

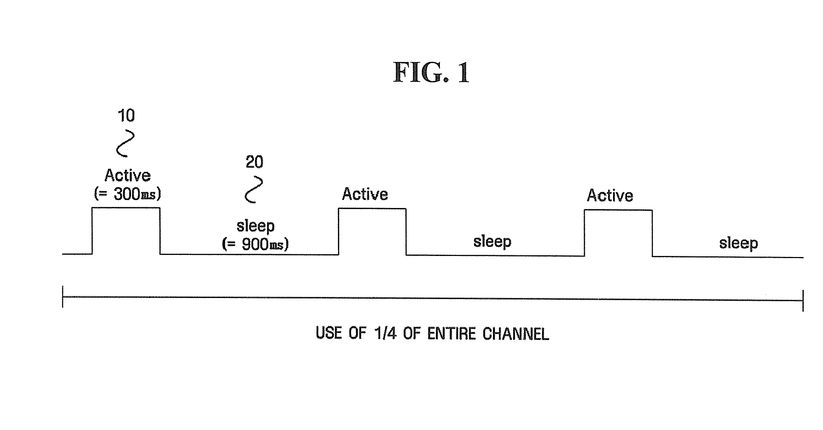

FIG. 1 is an exemplary diagram for explaining the utilization of a channel in a coordinator-based wireless network.

Referring to FIG. 1, a channel is segmented into active periods 10 during which data is transmitted and received on the coordinator-based wireless network and sleep periods 20 during which no data is transmitted nor received. When the durations of the active period 10 and the sleep period are 300 and 900 ms, respectively, the wireless network uses only one quarter (25%) of the channel, which may deteriorate the efficiency of channel utilization.

The present invention provides a method and apparatus for sharing a single channel among multiple wireless networks.

The present invention also provides a method and apparatus for increasing channel utilization efficiency by allowing another wireless network to use an unused channel period.

The above stated objects as well as other objects, features and advantages, of the present invention will become clear to those skilled in the art upon review of the following description.

According to the present invention there is provided an apparatus and method as set forth in the appended claims. Preferred features of the invention will be apparent from the dependent claims, and the description which follows.

According to an aspect of the present invention, there is provided a method for sharing a channel among coordinator-based wireless networks including the steps of a coordinator of a first wireless network selecting a channel through which data are transmitted and received, selecting a period during which the selected channel is in a sleep period; setting the selected period as an active period of the first wireless network, and transmitting data containing information about the active period to the first wireless network.

According to another aspect of the present invention, there is provided an apparatus for sharing a channel among coordinator-based wireless networks, the apparatus including a controller for selecting a channel through which data are transmitted and received, a receiver for receiving data transmitted through the selected channel, a period selection unit for analyzing data received by the receiver, selecting a period during which the selected channel is in a sleep period, and setting the selected period as an active period of a wireless network, a management information generation unit for generating data containing information about the active period set by the period selection unit, and a transmitter for sending the data generated by the management information generation unit to the wireless network.

For a better understanding of the invention, and to show how embodiments of the same may be carried into effect, reference will now be made, by way of example, to the accompanying diagrammatic drawings in which:

FIG. 1 is an exemplary diagram of the use of channel on a coordinator-based wireless network;

FIG. 2 is an exemplary diagram in which a plurality of wireless networks share a channel according to an embodiment of the present invention;

FIG. 3 is a flowchart illustrating a process of a coordinator of a wireless network setting an active period according to an embodiment of the present invention;

FIGS. 4A and 4B are exemplary diagrams of an 802.15.4 beacon frame according to an embodiment of the present invention;

FIG. 5 is an exemplary diagram in which all wireless networks use a superframe having the same length according to an embodiment of the present invention;

FIG. 6 is an exemplary diagram in which wireless networks use variable length superframes according to an embodiment of the present invention;

FIGS. 7A and 7B are exemplary diagrams in which a coordinator of a wireless network selects an active period using a best-fit algorithm;

FIGS. 8A and 8B are exemplary diagrams in which a coordinator of a wireless network selects an active period using a largest-fit algorithm; and

FIG. 9 is a block diagram of a wireless network device according to an embodiment of the present invention.

As illustrated in FIG. 1, the wireless network remains in an active period for a certain time while staying in a sleep period for the rest of the time and no channel is used when the wireless network is in a sleep period, thus resulting in waste of the channel. To address this limitation, there is a need to develop a method for sharing a channel among wireless networks.

The present invention will now be described more fully with reference to the accompanying drawings, in which exemplary embodiments of the invention are shown.

Before explaining the present invention, terms used in the specification will now be described briefly.

- Coordinator-based wireless network

A network including a wireless network device acting as a coordinator ('coordinator-based wireless network') is an independent single wireless network centered about the coordinator. When a plurality of coordinator-based wireless networks exist within a given space, each of the plurality of coordinator-based wireless networks has unique ID information to distinguish it from others. The coordinator-based network is different from an infrastructure network making wires communication through an access point (AP) or base station. In broad terms, the coordinator-based network may be considered an ad-hoc network but it includes one or more coordinators. A coordinator may transmit timing information necessary for a wireless network. Wireless network devices receiving information can be associated to the network to then send the received information to another network device. Examples of current coordinator-based network protocols include Bluetooth, UltraWideband (UWB, 802.15.3) and ZigBee (802.15.4), and their standardization is underway or finalized. In the following descriptions, the present invention will be described based on the 802.15.4 protocol. However, the 802.15.4 protocol is provided as illustration only and the invention may also be applied to other protocols.

- Beacon frame

A beacon frame is used to inform the existence of a network and plays an important role in network maintenance. The beacon frame contains parameters required for network devices to join a network. A network coordinator periodically sends a beacon frame to allow devices participating in a wireless network to locate and identify the network.

- Device/Network device

A device or a network device refers to a device forming a wireless network and having the ability to perform communication with another device. A device in an 802.15.4 network may be a wireless integrated remote controller, a home appliance controller, a device for building control, a remote control toy, a mouse, or a cooking utensil. The device may also perform main functions such as communication, control, and sensor functions in a home network or ubiquitous environment.

- Active/Sleep

To minimize power consumption, devices in a wireless network go into a sleep period upon completion of active period in which data are transmitted and received. This can apply when a small amount of data are transmitted and received or when real-time data transmission and reception is not strictly required. Hereinafter, an active period is deemed to contain time required for transmitting and receiving information necessary for managing and controlling a network such as a beacon frame and time required for transmitting and receiving data over a wireless network.

- Superframe

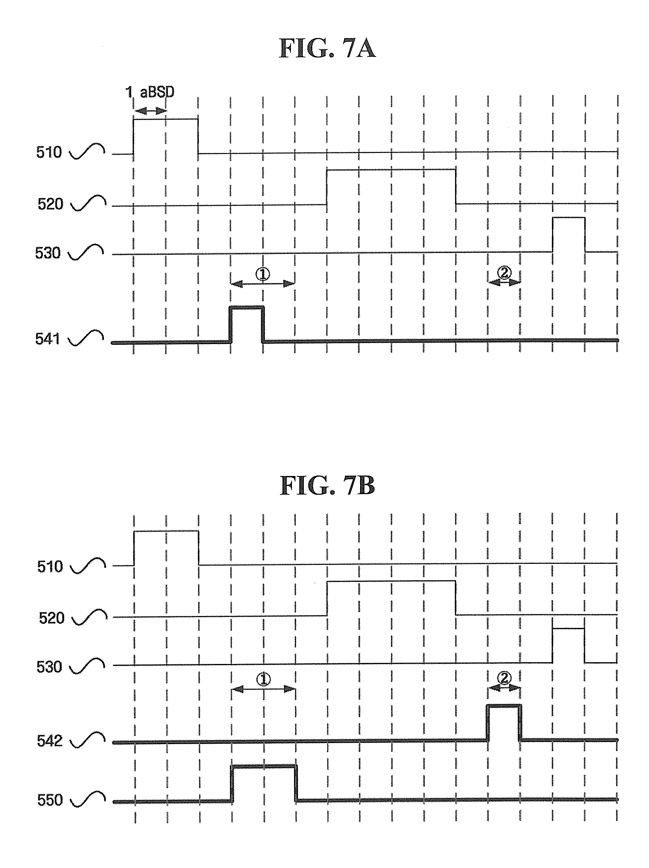

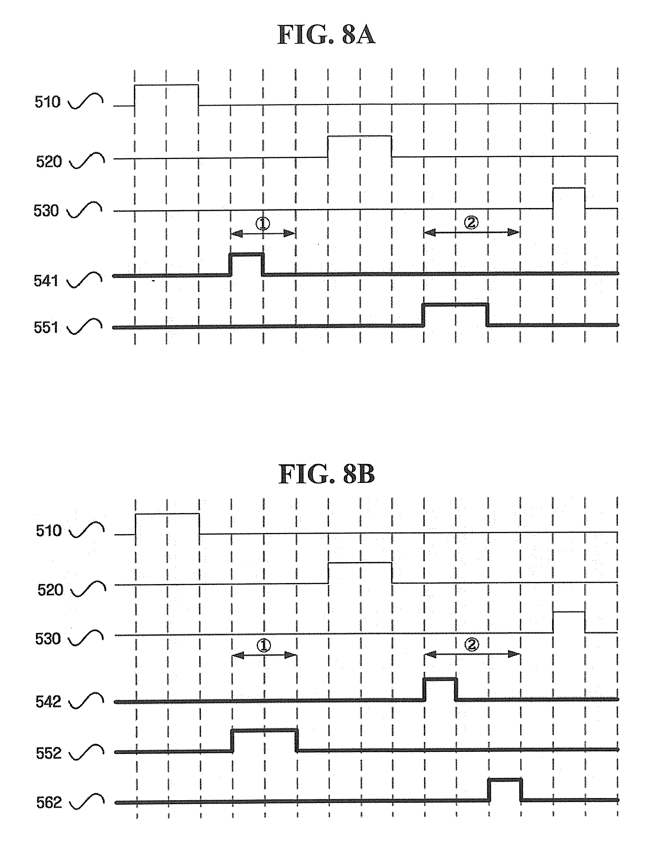

A time period between two consecutive beacon frames is called a superframe. The superframe is divided into two periods: a sleep period and an active period containing a time required to transmit a beacon frame plus a time required to transmit and receive wireless data between devices.

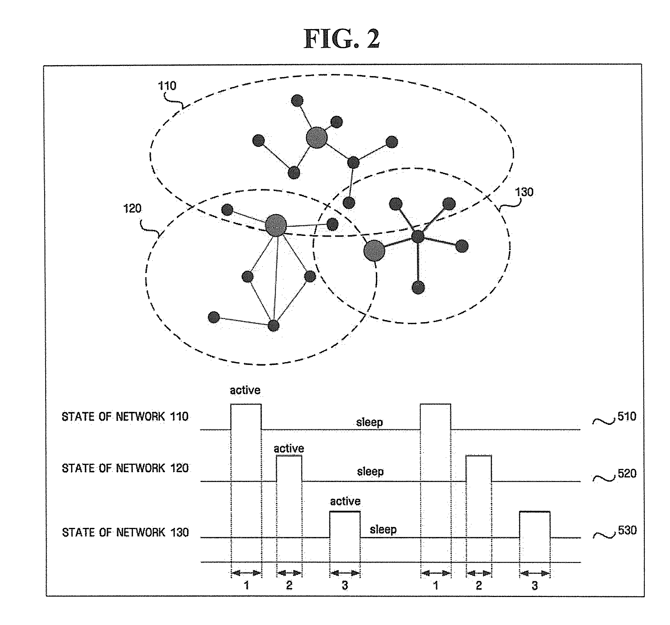

FIG. 2 is an exemplary diagram in which a plurality of wireless networks 110, 120, and 130 share a channel according to an embodiment of the present invention.
Referring to FIG. 2, the wireless networks 110, 120, and 130 partially overlap one another. In general, when the wireless networks 110, 120, and 130 use the same channel simultaneously, a collision occurs among them. However, no collision occurs when the wireless networks 110, 120, and 130 do not use the same channel simultaneously.
The networks 110, 120, and 130 use the channel during first, second, and third periods, respectively. Since the same channel is used during different time periods, collision of data transmitted and received does not occur among the networks 110, 120, and 130.
Thus, a coordinator of a wireless network checks an active period of other wireless networks and sets the wireless network to the active period at a portion other than the active period of the other network device, thereby allowing two or more wireless networks to coexist on the same channel.

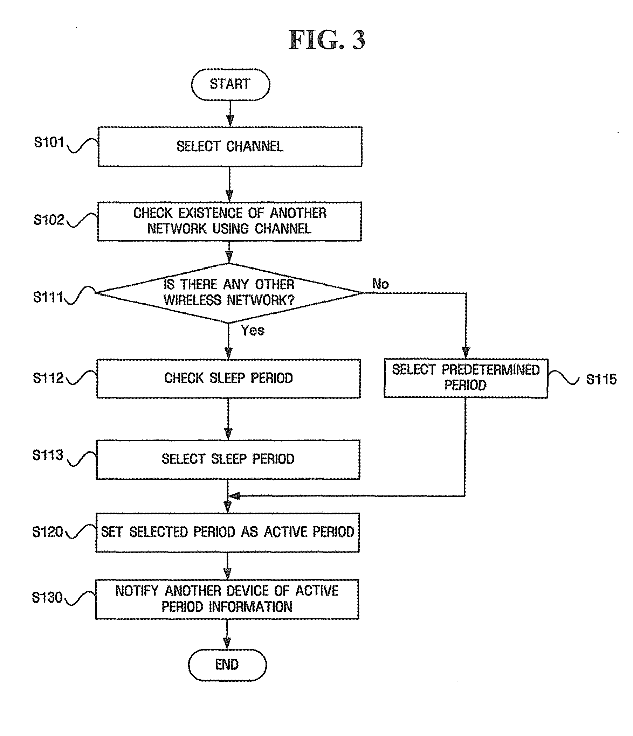

FIG. 3 is a flowchart illustrating a process of a coordinator of a wireless network setting an active period according to an embodiment of the present invention.
Referring to FIG. 3, in step S101, the coordinator of the wireless network selects a channel. The coordinator may select a channel to start a new wireless network, move to a new channel in the existing wireless network, or reset an active period for the current channel.
In step S102, once the channel is selected, the coordinator checks whether there is another wireless network using the same channel. The existence of the other wireless network may be determined depending on whether a wireless signal is detected on the channel. Alternatively, the coordinator may check the existence of the other wireless network by receiving a beacon frame from the other wireless network through the channel.
When the other wireless network using the same channel exists in the step S111, the coordinator checks the existence of a period during which the other wireless network is in a sleep period in step S112. The sleep period can be obtained by referencing values stored in the beacon frame received from the other wireless network through the channel. An unused or sleep period can be obtained by calculating a time to use or activate the channel during a superframe period.
In step S113, when there is a sleep period satisfying coordinator's intended requirements, the coordinator selects the sleep period. If there are two or more sleep periods satisfying coordinator's intended requirements, the coordinator may determine whether to select a sleep period having a duration closest to that of a desired active period or the longest sleep period.
A method for selecting one among a plurality of sleep periods will be described in detail later with reference to FIGS. 7 and 8.

In step S120, the sleep period selected in the step S 113 is set as an active period associated with the wireless network. In step S130, the coordinator notifies other devices in the wireless network of information about the period set as the active period. The information can be contained in the beacon frame.

When the other wireless network using the same channel does not exist in the step S111, a predetermined period necessary for the wireless network is selected in step S115. Subsequent steps 120 and 130 are performed in the same way as described above.

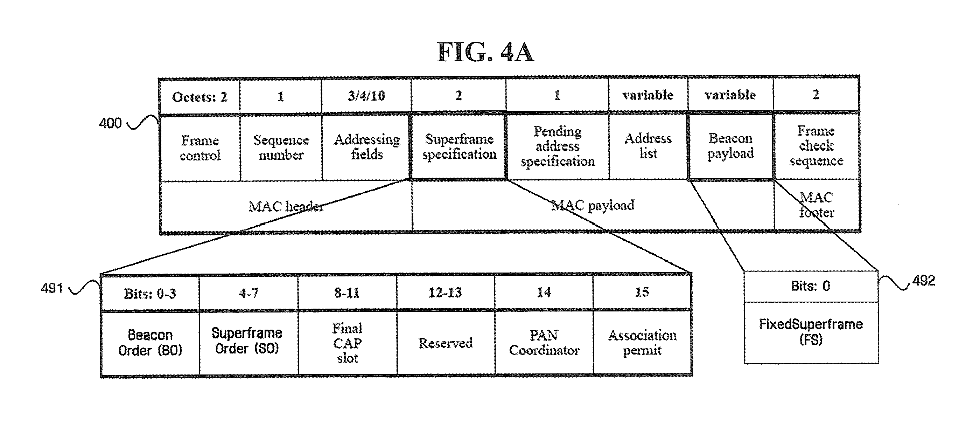

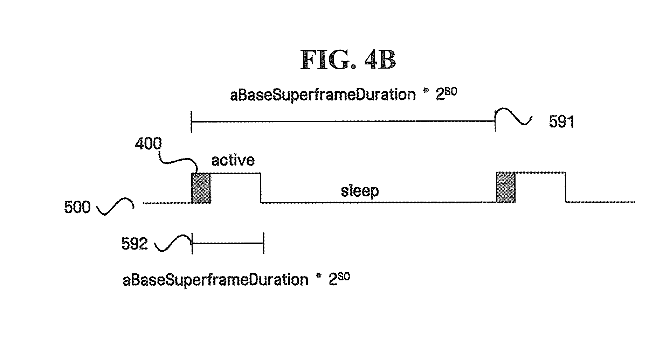

FIGS. 4A and 4B are exemplary diagrams of an IEEE 802.15.4 beacon frame 400 according to an embodiment of the present invention.

FIG. 4A illustrates the format of the beacon frame 400. The beacon frame 400 contains information about maintenance and management of a network. A superframe specification field is 16-bits (2 octets) long and consists of several subfields as shown in 491.

A Beacon order (BO) subfield is 4 bits long and specifies a period between two consecutive beacons. When BO represents a beacon order, a beacon interval (BI) that is the length of a superframe is defined as follows:

$$BI = aBaseSuperframe\_Duration * 2^{BO}$$

A 4-bit superframe order (SO) subfield specifies the duration of active superframe period containing beacon frame transmission time. The coordinator transmits/receives data to/from a wireless network only during the active superframe duration. When SO represents a superframe order, a superframe duration (SD) is defined as follows:

$$0 \le SO \le BO \le 14, SD = aBaseSuperframe\_Duration * 2^{SO}.$$

If SO=15, after sending a beacon, the superframe will not be in an active period any more. The term aBaseSuperframe_Duration used for calculating both BO and SO denotes the number of symbols used to transmit a signal. In order to share the same channel with other networks, beacon frames currently being transmitted are received, thereby identifying when networks will be in an active period.

Element "492" denotes a fixed superframe (FS) subfield according to an embodiment of the present invention. The FS is set to 1 when a superframe has a fixed length superframe while it is set to 0 when the superframe has a variable length.

FIG. 4B illustrates a process of deriving information about active period from the beacon frame 400 shown in FIG. 4A. Element "500" shows active and sleep periods. The duration of active superframe period is obtained using SO as shown in element "592". An interval at which two consecutive beacon frames are transmitted is obtained using BO. The beacon frame 400 is transmitted during an active period. Hereinafter, active and sleep periods will be described in detail in conjunction with element "500" shown in FIG. 4B.

While FIG. 4B shows the beacon frame 400 defined by the IEEE 802.15.4 protocol, information about a time during which a wireless network remains in an active period may be included in a frame containing information about network maintenance and control according to a protocol used on the wireless network.

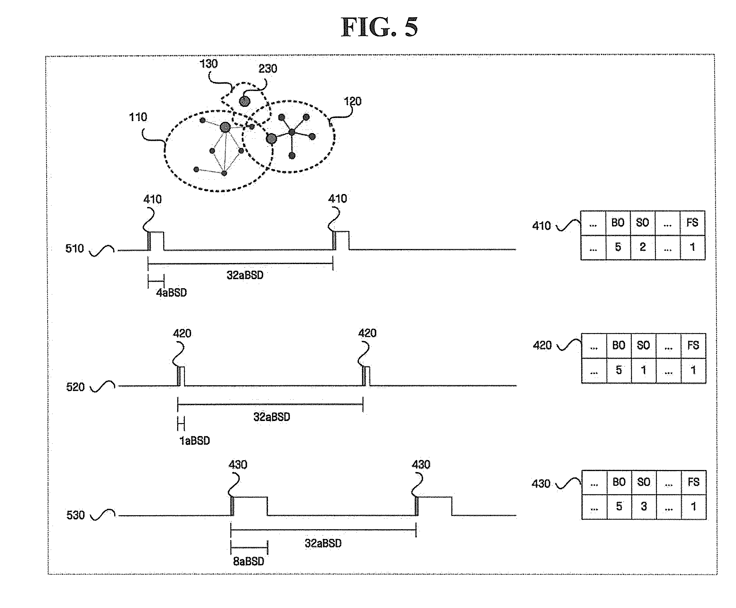

FIG. 5 is an exemplary diagram in which all wireless networks use a superframe having the same length according to an embodiment of the present invention.

A superframe is a time period between two consecutive beacon frames. When a single wireless network uses one channel, it can freely select a superframe. However, when two or more wireless networks share a single channel by adjusting active/sleep period, use of a superframe consisting of different periods makes it difficult to detect a sleep period. FIG. 5 shows an example of all wireless networks using a superframe of the same length. To accomplish this, it may be assumed that all wireless networks use a predetermined length of a superframe. Alternatively, the superframe length initially set by a coordinator of a wireless network that has used a channel may be used by coordinators of other wireless networks desiring to use the same channel.

Referring to FIG. 5, two wireless networks 110 and 120 share the same channel, and a coordinator 230 intending to create a wireless network checks the state of the channel and then creates a wireless network 130.

Element "510" shows the active/sleep period of the wireless network 110. Information about the active/sleep period shown in FIG. 510 is contained in a beacon frame 410 being sent by a coordinator of the wireless network 110. Element "410" shows a portion of the beacon frame 400 of FIG. 4, i.e., BO, SO, and FS subfields. Because the BO and SO subfields are set to 5 and 2, respectively, the length of a superframe for the wireless network 110 is 32 aBaseSuperframe_Duration ('aBSD') (=aBSD * $2^5$) and the active superframe duration is 4aBSD (=aBSD * $2^2$). The FS subfield is set to 1, indicating that the superframe is of a fixed length.

Element "420" shows the format of a beacon frame sent by a coordinator of the wireless network 120, in which BO and SO subfields are set to 5 and 1, respectively. Element "520" shows the active/sleep period of the wireless network 120. The length of a superframe is 32aBSD and the active superframe duration is 2aBSD. The FS subfield is set to 1, indicating that the superframe is of a fixed length.

On the basis of the beacon frames transmitted from the wireless networks 110 and 120, it is possible to know that the newly participating wireless network 130 uses a superframe of a fixed length using the FS subfield. In addition, it is possible to know the length of a superframe and active superframe duration using BO and SO subfields. It is possible to detect a sleep period by checking the transmission and reception states of the networks 110 and 120 while the superframe duration lasts.

In order to make use of the lengths of the superframes of the wireless networks 110 and 120, the coordinator 230 of the wireless network 130 sets the BO subfield to 5. Then, the coordinator 230 sets the SO subfield (8aBSD) to 5 so as to avoid active periods of the wireless networks 110 and 120 and transmits a beacon frame 430 in a sleep period. In the present invention, since a beacon frame is transmitted in a sleep period, an active period like element "530" can be maintained.

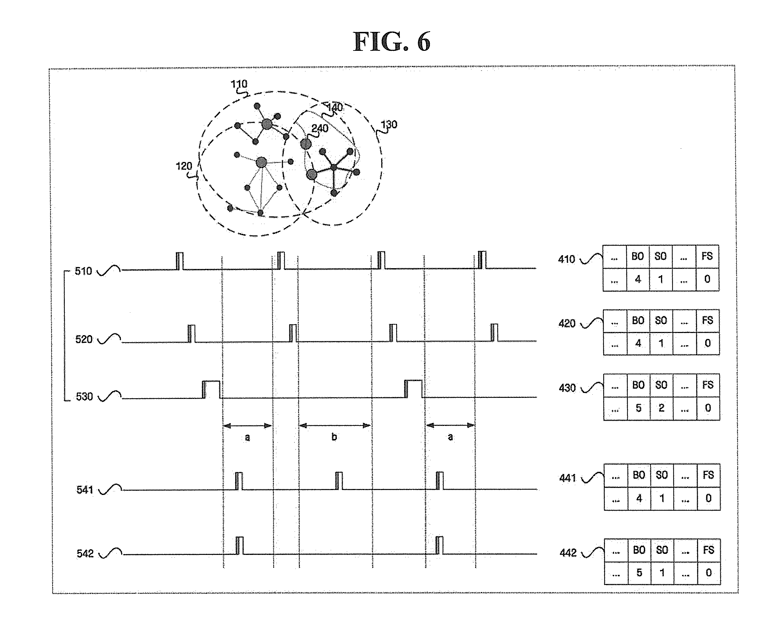

FIG. 6 is an exemplary diagram in which wireless networks use variable length superframes according to an embodiment of the present invention.

It may be not efficient for all wireless networks to use a superframe of the same length. A wireless network that may not necessarily send a beacon frame very often may set a length of a superframe to adapt to its own network circumstances while sending the beacon frame during a period other than intervals during which other wireless networks are in an active period.

Referring to FIG. 6, three wireless networks 110, 120, and 130 share a specific channel. Elements 510, 520, and 530 respectively show the active/sleep periods of the three wireless networks 110, 120, and 130. Unlike in FIG. 5, the length of a superframe and active superframe duration are 16aBSD (BO=4) and 2aBSD (SO=1) for the wireless networks 110 and 120, respectively, while they are 32aBSD (BO=5) and 4aBSD (SO=2) for the wireless network 130. That is, while FIG. 5 shows all the wireless networks 110, 120, and 130 transmit the beacon frames 410, 420, and 430 at equal intervals, FIG. 6 shows the wireless networks 110 and 120 send beacon frames at intervals different than the wireless network 130 because the superframe lengths are 16aBSD and 32aBSD, respectively. A newly participating wireless network 140 is allowed to use intervals 'a' and 'b'. FS subfields in the beacon frames sent by the wireless networks 110, 120, and 130 are all set to 0, indicating that they do not need to use superframes of a fixed length.

A coordinator 240 of the wireless network 140 may use the interval 'a' as an active period and sets BO subfield to 4 in order to make the lengths of the superframe equal to that for the wireless networks 110 and 120 and the SO subfield indicating the duration of an active superframe period to 1, thus allowing the wireless network 140 to operate as shown in 541. Alternatively, the coordinator 240 may set the BO subfield to 5 in order to make the superframe length equal to that for the wireless network 130 and the SO subfield to 1, thus allowing the wireless network 140 to operate as shown in 542. The coordinator 240 may also set the BO subfield to 6 and select the intervals 'a' or 'b' as an active period. That is, the coordinator 240 may select a superframe length to adapt to circumstances and characteristics of the wireless network 140.

Unlike in FIG. 5 showing that the coordinator checks the state of a channel during time corresponding to the length of a superframe, when wireless networks use variable length superframes as shown in FIG. 6, a coordinator checks the existence of active periods until BO reaches 14, i.e., the maximum beacon interval. One of the two methods may be selected according to channel circumstances and network characteristics.

FIGS. 7A and 7B are exemplary diagrams in which a coordinator of a wireless network selects an active period using a best-fit algorithm.

Referring to FIG. 7A, a gap between intervals during which a wireless network is in an active period must be greater than 1aBSD to minimize signal interference between wireless networks.

When an active period is randomly selected among sleep periods of the channel, the efficiency of channel utilization may decrease. For example, referring to FIG. 7A, first through third networks respectively have active periods having durations of 2 aBSD, 4aBSD, and 1aBSD as shown in elements " 510 " , " 520 " , and "530". Because sleep periods are ① and ②, a portion of interval ① may be selected as an active period of a fourth wireless network as shown in element 541. As a result, another network having an active period of 2aBSD cannot use the channel because only the sleep period ② having the duration of 1aBSD is available.

On the other hand, when sleep period ② is used as an active period for the fourth network using a best-fit algorithm, the channel utilization efficiency can be improved. As evident from FIG. 7B, a fifth wireless network is allowed to select the sleep period ② having the duration of 2aBSD as an active period.

FIGS. 8A and 8B are exemplary diagrams in which a coordinator of a wireless network selects an active period using a largest-fit algorithm.

The best-fit algorithm shown in FIG. 7 allows selection of the fittest (exchangeable with 'best-fit') interval but may suffer fragmentation of intervals.

Referring to FIG. 8A, three wireless networks share one channel and have active periods as shown in elements "510", "520", and "530". A gap between active periods must be at least 1aBSD to reduce interference between wireless networks. When newly participating three networks desire to select active periods with durations of 1aBSD, 2aBSD, and 1aBSD, respectively, the best-fit algorithm can apply as shown in FIG. 8B.

First, a fourth wireless network uses a portion of the fittest interval ① as an active period (see element 541). Then, a fifth wireless network uses a portion of interval ② as an active period (see element 551) because the remaining portion of interval ① is shorter than the duration of the desired active period. Thus, a sixth wireless network that desires to set an active period having the duration of 1aBSD cannot use the channel because there is no sleep period available. However, when the largest-fit algorithm is used to preferentially select the largest interval as an active period as shown in FIG. 8B, the fourth wireless network uses a portion of the interval ② as an active period (element 542) and the fifth one uses the interval ① as such (element 552). Therefore, the sixth wireless network is allowed to share the channel by selecting another portion of the interval ② as an active period.

The best-fit algorithm shown in FIG. 7 allows selection of the fittest (exchangeable with 'best-fit') interval but may suffer fragmentation of intervals.

Referring to FIG. 8A, three wireless networks share one channel and have active periods as shown in elements "510", "520", and "530". A gap between active periods must be at least 1aBSD to reduce interference between wireless networks. When newly participating three networks desire to select active periods with durations of 1aBSD, 2aBSD, and 1aBSD, respectively, the best-fit algorithm can apply as shown in FIG. 8B.

First, a fourth wireless network uses a portion of the fittest interval ① as an active period (see element 541). Then, a fifth wireless network uses a portion of interval ② as an active period (see element 551) because the remaining portion of interval ① is shorter than the duration of the desired active period. Thus, a sixth wireless network that desires to set an active period having the duration of 1aBSD cannot use the channel because there is no sleep period available. However, when the largest-fit algorithm is used to preferentially select the largest interval as an active period as shown in FIG. 8B, the fourth wireless network uses a portion of the interval ② as an active period (element 542) and the fifth one uses the interval ① as such (element 552). Therefore, the sixth wireless network is allowed to share the channel by selecting another portion of the interval ② as an active period.

The best-fit or largest-fit algorithm can be used depending on the characteristics of wireless networks. When the durations of active periods for wireless networks are almost equal, the best-fit algorithm shown in FIG. 7 is preferable. Conversely, when active periods for the wireless networks have different durations, the largest-fit algorithm shown in FIG. 8 is preferable. While FIGS. 7 and 8 show the use of the best-fit and largest-fit algorithms, it is only for exemplary purposes, and the present invention can be applied in various other mechanisms.

The above-mentioned methods for channel sharing can also apply when a coordinator of the wireless network checks the state of a channel and sets an active period before creating a wireless network. The methods can also apply when the coordinator modifies the duration of an active period after forming a wireless network, i.e., by extending the duration of the active period due to an increase in the amount of data to be transmitted or the number of devices or reducing the duration due to a decrease in the amount of data or the number of devices. In this case, when a variable length superframe is used, an interval between two consecutive beacon frames can also be adjusted. The duration of the active period can be modified in the same fashion as in a mechanism for detecting a sleep period by checking the state of a wireless channel when a new network is created, except that the active period to be modified is deemed a sleep period.

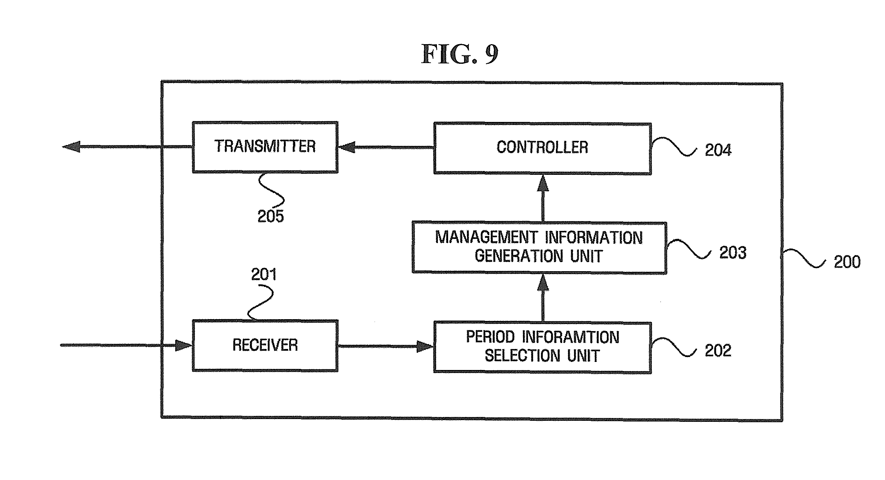

FIG. 9 is a block diagram of a wireless network device 200 according to an embodiment of the present invention.

Referring to FIG. 9, the wireless network device 200 includes a receiver 201, a period selection unit 202, a management information generation unit 203, a controller 204, and a transmitter 205.

The receiver 201 and the transmitter 205 transmit and receive data. The data contains data that is used to manage a wireless network.

Furthermore, the receiver 201 senses a wireless signal transmitted or received through a channel and receives a beacon frame containing management information sent by the wireless network. The received signal or information contained in the beacon frame is then sent to the period selection unit 202 that checks the existence of a sleep period on the channel using the information contained in the beacon frame or regularity of the received signal. Information about an active period can be obtained as shown in FIG. 4. The period selection unit 202 selects a specific period as an active period among sleep periods and sends information about the selected period to the management information generation unit 203.

The management information generation unit 203 generates data used to manage the network. As in the embodiment shown in FIG. 4, a period during which the wireless network is in an active period can be selected by checking an interval at which management data such as beacon is sent. The information about the selected period may be contained in the beacon frame.

The controller 204 sends a frame generated by the management information generation unit 203 through the transmitter 205. Here, the controller 204 allows the transmitter 205 to send the frame during the period selected by the period selection unit 202. To prevent the selected period from overlapping with an active period for another wireless network, the transmitter 205 must be controlled by the controller 204 to send management data such as a beacon frame precisely during the selected period.

According to the present invention, a plurality of wireless networks can share a single channel.

In addition, a wireless network is allowed to use an interval not used by another wireless network on the channel, thereby increasing the efficiency of channel utilization.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A method for sharing a channel among coordinator-based wireless networks, the method comprising:

   a coordinator (230) of a first wireless network (110) selecting a channel through which data are transmitted and received;
   selecting a period during which the selected channel is in a sleep period;
   setting the selected period as an active period of the first wireless network (110); and
   transmitting data containing information about the active period to the first wireless network (110).

2. The method of claim 1, wherein the selecting of the sleep period comprises selecting a period during which a second wireless network (120) using the channel is in a sleep period.

3. The method of claim 1 or claim 2, wherein the selecting of the channel comprises selecting a channel through which data are transmitted and received on the second wireless network (120).

4. The method of any preceding claim, further comprising checking whether a second wireless network (120) using the channel exists after the selecting of the channel.

5. The method of any preceding claim, wherein the first wireless network (110) is based on IEEE 802.15.4 protocol.

6. The method of any preceding claim, wherein the selecting of the sleep period comprises selecting a sleep period having a duration closest to that of an active period that the coordinator (230) of the first wireless network (110) desires to set when at least two sleep periods exist.

7. The method of any preceding claim, wherein the selecting of the sleep period comprises selecting the longest sleep period when at least two sleep periods exist.

8. The method of any preceding claim, after the transmitting of the data to the first wireless network (110), further comprising:

   the coordinator (230) of the first wireless network (110) reselecting a period during which the channel is in a sleep period;
   resetting the reselected period as an active period of the first wireless network (110); and

retransmitting data containing information about the active period to the first wireless network (110).

9. The method of any preceding claim, wherein the sleep period is a period during which no data are transmitted or received.

10. The method of any preceding claim, wherein the data containing the information about the active period is a beacon frame.

11. The method of claim 10, wherein the selecting of the sleep period comprises selecting a period during which a second wireless network (120) using the channel is in a sleep period, and
wherein the transmitting of the data to the first wireless network (110) comprises sending the beacon frame at intervals equal to a beacon frame transmission interval for the second wireless network (120).

12. The method of claim 10 or claim 11, wherein the selecting of the sleep period comprises:

checking the state of a channel during the longest interval corresponding to the maximum beacon frame transmission interval provided by a protocol of the first wireless network (110); and
selecting an interval within the longest interval, during which the second wireless network (120) using the channel is in a sleep period.

13. An apparatus for sharing a channel among coordinator-based wireless networks, the apparatus comprising:

a controller (204) for selecting a channel through which data are transmitted and received;
a receiver (201) for receiving data transmitted through the selected channel;
a period selection unit (202) for analyzing data received by the receiver (201), for selecting a period during which the selected channel is in a sleep period, and for setting the selected period as an active period of a wireless network;
a management information generation unit (203) for generating data containing information about the active period set by the period selection unit (202); and
a transmitter (205) for sending the data generated by the management information generation unit (203) to the wireless network.

14. The apparatus of claim 13, wherein the period selection unit (202) is operable to select a period during which there is no data received by the receiver (201).

15. The apparatus of claim 13 or claim 14, wherein the controller (204) is operable to select a channel through which data are transmitted and received on a second wireless network (120).

16. The apparatus of any one of claims 13 to 15, wherein the controller (204) is operable to check whether a second wireless network (120) using the channel exists using data received by the receiver (201) through the channel after selecting the channel.

17. The apparatus of any one of claims 13 to 16, wherein the apparatus is a wireless network device based on IEEE 802.15.4 protocol.

18. The apparatus of any one of claims 13 to 17, wherein the period selection unit (202) is operable to select a sleep period having a duration closest to that of an active period that a coordinator (230) of the first wireless network (110) desires to set when at least two sleep periods exist.

19. The apparatus of any one of claims 13 to 18, wherein the period selection unit (202) is operable to select the longest sleep period when at least two sleep periods exist.

20. The apparatus of any one of claims 13 to 19, wherein the sleep period is a period during which no data are transmitted or received.

21. The apparatus of any one of claims 13 to 20, wherein the data containing the information about the active period is a beacon frame.

22. The apparatus of claim 21, wherein the period selection unit (202) is operable to select a period during which a second wireless network (120) using the channel is in a sleep period, and
wherein the transmitter (205) is operable to send the beacon frame at intervals equal to a beacon frame transmission interval for the second wireless network (120).

23. The apparatus of claim 21 or claim 22, wherein the period selection unit (202) is operable to check the state of a channel during the longest period corresponding to the maximum beacon frame transmission period provided by a protocol of the first wireless network (110) and to select a period within the longest interval, during which the second wireless network (120) using the channel is in a sleep period.

# FIG. 1

10 — Active (= 300ms)

20 — sleep (= 900ms)

Active · sleep · Active · sleep

USE OF 1/4 OF ENTIRE CHANNEL

# FIG. 2

EP 1 662 730 A1

## FIG. 3

START

S101 — SELECT CHANNEL

S102 — CHECK EXISTENCE OF ANOTHER NETWORK USING CHANNEL

S111 — IS THERE ANY OTHER WIRELESS NETWORK?

No → SELECT PREDETERMINED PERIOD — S115

Yes

S112 — CHECK SLEEP PERIOD

S113 — SELECT SLEEP PERIOD

S120 — SET SELECTED PERIOD AS ACTIVE PERIOD

S130 — NOTIFY ANOTHER DEVICE OF ACTIVE PERIOD INFORMATION

END

# FIG. 4A

| Octets: 2 | 1 | 3/4/10 | 2 | 1 | variable | variable | 2 |
|-----------|---|--------|---|---|----------|----------|---|
| Frame control | Sequence number | Addressing fields | Superframe specification | Pending address specification | Address list | Beacon payload | Frame check sequence |
| MAC header | | | | MAC payload | | | MAC footer |

400

| Bits: 0-3 | 4-7 | 8-11 | 12-13 | 14 | 15 |
|-----------|-----|------|-------|----|----|
| Beacon Order (BO) | Superframe Order (SO) | Final CAP slot | Reserved | PAN Coordinator | Association permit |

491

| Bits: 0 |
|---------|
| FixedSuperframe (FS) |

492

# FIG. 4B

$$\text{aBaseSuperframeDuration} * 2^{BO}$$

591

400

active

sleep

500

592

$$\text{aBaseSuperframeDuration} * 2^{SO}$$

# FIG. 5

# FIG. 6

# FIG. 7A

# FIG. 7B

# FIG. 8A

# FIG. 8B

# FIG. 9

**European Patent Office**

**EUROPEAN SEARCH REPORT**

Application Number

EP 05 11 1329

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 556 576 B1 (DU YONGGANG ET AL) 29 April 2003 (2003-04-29) * paragraph [ABSTRACT]; figures 1,6 * * column 1, line 15 - column 8, line 65 * * column 10, lines 32-45 * | 1-23 | H04L12/56 |
| Y | US 2004/013127 A1 (SHVODIAN WILLIAM M) 22 January 2004 (2004-01-22) * paragraph [ABSTRACT]; figures 3,6-8 * * paragraphs [0007] - [0026], [0043] - [0060] * * paragraphs [0076] - [0101], [0137] * * paragraphs [0143] - [0151] * | 1-23 | |
| Y | US 2003/114204 A1 (ALLEN VERNON ANTHONY ET AL) 19 June 2003 (2003-06-19) * paragraph [ABSTRACT]; figures 5,9 * * paragraphs [0001] - [0006], [0022] * * paragraphs [0026] - [0030] * * paragraph [0034] * | 1-23 | |
| | | | TECHNICAL FIELDS SEARCHED (IPC) |
| A | WO 01/82550 A (INARI, INC) 1 November 2001 (2001-11-01) * page 2, lines 8-11 * * page 3, lines 12-15,24-28 * * page 14, lines 21-26 * * page 16, lines 17-23 * * page 19, lines 5-15 * | | H04L |

The present search report has been drawn up for all claims

| Place of search | Date of completion of the search | Examiner |
|---|---|---|
| Munich | 17 February 2006 | Pasini, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 662 730 A1**

## ANNEX TO THE EUROPEAN SEARCH REPORT
## ON EUROPEAN PATENT APPLICATION NO.

EP 05 11 1329

This annex lists the patent family members relating to the patent documents cited in the above-mentioned European search report.
The members are as contained in the European Patent Office EDP file on
The European Patent Office is in no way liable for these particulars which are merely given for the purpose of information.

17-02-2006

| Patent document cited in search report | | Publication date | Patent family member(s) | | Publication date |
|---|---|---|---|---|---|
| US 6556576 | B1 | 29-04-2003 | DE<br>EP<br>JP | 19848340 A1<br>0996257 A2<br>2000151682 A | 27-04-2000<br>26-04-2000<br>30-05-2000 |
| US 2004013127 | A1 | 22-01-2004 | NONE | | |
| US 2003114204 | A1 | 19-06-2003 | AU<br>WO | 2002362109 A1<br>03052950 A1 | 30-06-2003<br>26-06-2003 |
| WO 0182550 | A | 01-11-2001 | AU<br>EP | 5120101 A<br>1590920 A2 | 07-11-2001<br>02-11-2005 |

EPO FORM P0459

For more details about this annex : see Official Journal of the European Patent Office, No. 12/82

22